(19) Europäisches Patentamt
European Patent Office
Office européen des brevets

(11) **EP 3 376 166 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(51) Int Cl.:
**G01D 5/14** *(2006.01)*          **H02K 41/03** *(2006.01)*
**H02P 6/16** *(2016.01)*          **H02P 25/06** *(2016.01)*
**H02K 11/215** *(2016.01)*

(21) Anmeldenummer: **18160782.1**

(22) Anmeldetag: **08.03.2018**

(54) **VERFAHREN ZUR BESTIMMUNG DER ABSOLUTPOSITION EINES LÄUFERS EINES LINEARMOTORS**

METHOD FOR DETERMINING THE ABSOLUTION POSITION OF A RUNNER OF A LINEAR MOTOR

PROCÉDÉ DE DÉTERMINATION DE LA POSITION ABSOLUE D'UN ROTOR D'UN MOTEUR LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2017   AT 501982017**

(43) Veröffentlichungstag der Anmeldung:
**19.09.2018   Patentblatt 2018/38**

(60) Teilanmeldung:
**18201733.5 / 3 467 442**

(73) Patentinhaber: **B&R Industrial Automation GmbH**
**5142 Eggelsberg (AT)**

(72) Erfinder:
• **Weber, Andreas**
**5020 Salzburg (AT)**
• **Plainer, Manuel**
**4890 Weißenkirchen i.A. (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 1 195 880          EP-A1- 2 869 035**
**US-A1- 2010 176 806          US-A1- 2011 050 007**
**US-A1- 2013 037 384**

**Beschreibung**

Die gegenständliche Erfindung betrifft ein Verfahren zur Bestimmung der Absolutposition eines Läufers eines Linearmotors, der gegenüber einem ortsfesten Teil in einer Bewegungsrichtung bewegbar ist, wobei am Läufer eine Anordnung von Antriebsmagnete in Form einer Mehrzahl von in Bewegungsrichtung des Läufers nebeneinander angeordneten Antriebsmagneten vorgesehen ist und am ortsfesten Teil in Bewegungsrichtung des Läufers eine Mehrzahl von Positionssensoren ortsfest und beabstandet voneinander angeordnet sind, wobei mit einem Positionssensor ein Magnetfeld eines Antriebsmagnetes der Anordnung der Antriebsmagnete im Bereich des Positionssensors erfasst wird. Die Erfindung betrifft auch einen Linearmotor mit einer erfindungsgemäßen Bestimmung der Absolutposition.

Linearmotoren zeichnen sich dadurch aus, dass ein beweglicher Teil (der Läufer) gegenüber einem festen Teil (dem Stator) aufgrund wechselwirkender Magnetfelder bewegt wird. Dazu ist auf einem der beiden Teile ein Antriebsmagnet (Elektromagnet oder Permanentmagnet) angeordnet, der zur Erzeugung einer linearen Vortriebskraft mit dem Magnetfeld, das von einer bestromten Antriebsspule am anderen Teil erzeugt wird, zusammenwirkt. Wird an die Antriebsspule eine Spannung angelegt, entsteht ein magnetisches Feld, das mit dem Magnetfeld des Antriebsmagneten zusammenwirkt, wodurch eine Kraft auf den beweglichen Teil erzeugt wird, die den beweglichen Teil bewegt. Zur Bewegung des Läufers wird durch entsprechende Ansteuerung der Antriebsspulen ein bewegtes Magnetfeld erzeugt. Dieses motorische Grundprinzip ist natürlich hinreichend bekannt, weshalb hier nicht näher darauf eingegangen werden muss. Dabei ist es grundsätzlich auch unerheblich, ob die Antriebsspulen auf dem bewegten Teil (Läufer) oder dem feststehenden Teil (Stator) vorgesehen sind.

Zur Regelung der Bewegung des Läufers eines Linearmotors ist es unbedingt erforderlich dessen aktuelle Position, relativ zum Stator zu kennen, um die Antriebsspulen zur Erzeugung des bewegten Magnetfeldes richtig bestromen zu können. Der Positionsbestimmung des Läufers kommt daher eine besondere Rolle zu. Hierbei ist es insbesondere schwierig, die aktuelle Position des Läufers beim Einschalten des Linearmotors zu bestimmen, weil man vorab nicht wissen kann, wo sich der Läufer zum Zeitpunkt des Einschaltens befindet. Zur Positionsbestimmung beim Einschalten des Linearmotors sind schon verschiedene Methoden vorgeschlagen worden.

Die US 7,932,684 B2 beschreibt beispielsweise einen Linearmotor, der zur Positionsbestimmung zusätzlich am Läufer angeordnete Positionsmagnete und ortsfeste Positionssensoren (z.B. am Stator angeordnet) umfasst. Wird der Läufer bewegt, bewegen sich die Positionsmagnete relativ zu den Positionssensoren und die aktuelle Position des Läufers relativ zum Stator kann bestimmt werden. Die Positionsmagnete umfassen eine erste Reihe einer Anzahl von nebeneinander angeordneten Permanentmagneten, die mit einem Inkrementalsensor zusammenwirken und eine zweite Reihe einer Anzahl von nebeneinander angeordneten Permanentmagneten, die mit einem Absolutsensor zusammenwirken. Der Absolutsensor, z.B. ein Hall-Sensor, ist so ausgeführt, dass dieser nur zwei Zustände liefert, wobei der Zustand an einer definierten Position des Läufers wechselt. Der Inkrementalsensor, z.B. ein magnetoresistiver Sensor, ist so ausgeführt, dass dieser viele wiederkehrende Sensorzyklen liefert, wobei innerhalb eines Sensorzyklus die Position sehr genau bestimmt werden kann. Beim Einschalten muss zuerst ein "Homing", also eine Referenzierung einer vorgegebenen, bekannten Nullposition, durchgeführt werden. Dazu wird der Läufer bewegt, bis der Absolutsensor einen Zustandswechsel erfasst, womit die Nullposition bestimmt ist. Ausgehend von der Nullposition kann dann die aktuelle Position des Läufers inkrementell ermittelt werden, in dem die Anzahl der Sensorzyklen gezählt wird und innerhalb der Sensorzyklen eine feine Bestimmung der Position erfolgt. Zur Bestimmung der Position des Läufers beim Einschalten ist daher in der US 7,932,684 B2 eine Referenzfahrt notwendig. Diese Art der Positionserfassung ist aber nur bei relativ eingeschränkten Bewegungsbereichen des Läufers sinnvoll zu realisieren. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die Bestimmung einer Absolutposition, auch beim Einschalten des Linearmotors, kann der US 7,994,742 B2 entnommen werden. Dabei ist über den möglichen Bewegungsspielraum ein länglicher Positionsmagnet am Läufer angeordnet, wobei der Positionsmagnet so angeordnet ist, dass sich ein positionsabhängiges Offset in Querrichtung ergibt. An einer ortsfesten Konstruktion, z.B. dem Stator, ist ein Positionssensor angeordnet, der das Magnetfeld des Positionsmagneten erfasst. Aufgrund des Offsets ergibt sich an jeder Position des Läufers ein eindeutiges Magnetfeld, das vom Positionssensor erfasst wird. Damit kann auch beim Einschalten des Linearmotors sofort und ohne Bewegung des Läufers auf die aktuelle Position des Läufers geschlossen werden. Der Bewegungsspielraum ist dabei aber natürlich auf die Länge des Positionsmagneten beschränkt und damit sehr limitiert. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die US 6,876,107 B2 beschreibt als Linearmotor einen bekannten Langstatorlinearmotor. Ein solcher Langstatorlinearmotor umfasst eine Vielzahl von Antriebsspulen, die ortsfest, nebeneinander angeordnet sind und den Stator des Langstatorlinearmotors ausbilden. Entlang des Stators können eine Vielzahl von Läufern angeordnet sein, die entlang des Stators bewegt werden können. Jeder Läufer trägt einen Antriebsmagneten. Zur Bewegung des Läufers werden jeweils die Antriebsspulen bestromt, die gerade mit einem Läufer zusammenwirken. Auf diese Weise können einzelne Läufer unabhängig voneinander entlang des Stators bewegt werden. Solche Langstatorlinearmotoren werden häufig in flexiblen Transportsystemen eingesetzt, beispielsweise in einem Produktionsprozess oder in der Fördertechnik. Die US 6,876,107 B2 beschreibt ferner die Bestimmung einer echten Absolutposition ("true absolute position"), die es ermöglicht, sofort beim Einschalten des Langstatorlinearmotors die genaue Position eines Läufers zu bestimmen, ohne hierfür eine Referenzierung (beispielsweise durch eine Referenzfahrt des Läufers) durchführen zu müssen. Das ist natürlich sehr vorteilhaft, ganz besonders wenn man bedenkt, dass in einem Langstatorlinearmotor nicht selten einige hundert Läufer gleichzeitig vorhanden sein können. Dafür ist an einem Läufer genau ein zusätzlicher Positionsmagnet angeordnet und entlang des Stators sind eine Vielzahl von Positionssensoren, z.B. magnetoresistive Sensoren, angeordnet, die das Magnetfeld des Positionsmagnets erfassen. Die Positionssensoren müssen dabei aber so eng angeordnet sein, dass sichergestellt ist, dass zu jeden Zeitpunkt zumindest ein Positionssensor das Magnetfeld des Positionsmagneten erfassen kann. Beim Einschalten des Langstatorlinearmotors spricht damit für jeden Läufer zumindest ein Positionssensor an, womit die Positionsbestimmung auch ohne Referenzierung des Läufers möglich ist. Der Nachteil dabei ist, dass ein zusätzlicher Positionsmagnet erforderlich ist und die Positionssensoren sehr engmaschig angeordnet sein müssen, was eine hohe Anzahl solcher Positionssensoren notwendig macht.

Die US 2011/0050007 A1 beschreibt ein Verfahren zur Bestimmung der Absolutposition eines Läufers eines Linearmotors mittels Positionssensoren, bei dem zuerst eine Grobpositionierung des Läufers durchgeführt wird, indem eine Gleichspannung an die Antriebsspulen angelegt wird. Dabei nimmt der Läufer eine der möglichen Grobpositionen ein, wobei sich die Anzahl der möglichen Grobpositionen aus der Anzahl der Magnetpole der Antriebsmagnete am Läufer ergibt. Danach wird an die Antriebsspulen eine Wechselspannung angelegt, um die Induktivitäten der Antriebsspulen zu ermitteln. Außerdem sind zusätzlich Hall Sensoren vorgesehen, um Zusatzinformation über die Position des Läufers zu erhalten. Aus der Information der Positionssensoren, den Ermittelten Induktivitäten sowie der erhaltenen Zusatzinformation kann dann auf eine der möglichen Grobpositionen geschlossen werden, womit in weitere Folge die Ermittlung der Absolutposition möglich ist. Damit entspricht dieses Vorgehen einer Art Referenzieren des Läufers und es sind für die Bestimmung der Absolutposition zusätzliche Sensoren erforderlich.

Es ist eine Aufgabe der gegenständlichen Erfindung ein Verfahren zum Bestimmen der Absolutposition eines Läufers eines Linearmotors anzugeben, dass weder eine Bewegung des Läufers benötigt, noch einen zusätzlichen Permanentmagneten oder eine enge Anordnung von Positionssensoren erfordert und auch große Bewegungen des Läufers ermöglicht. Diese Aufgabe wird gelöst, indem zumindest ein Randbereich der Anordnung von Antriebsmagneten bestimmt wird und daraus eine Grobposition des Läufers abgeleitet wird, anhand der mit der bekannten Geometrie des Läufers derjenige konkrete Antriebsmagnet der Anordnung von Antriebsmagnete ermittelt wird, dessen Magnetfeld von zumindest einem der Positionssensoren im Bereich der Anordnung von Antriebsmagnete erfasst wird, wobei der zumindest eine Positionssensor eine Relativposition des gemessenen Antriebsmagneten relativ zum zumindest einen Positionssensor ermittelt und dass aus der bekannten Einbauposition dieses zumindest einen Positionssensors und aus der ermittelten Relativposition die Absolutposition des Läufers bestimmt wird. Mit dieser Methode kann die Absolutposition einfach ermittelt werden, ohne der Notwendigkeit einer Referenzierung und ohne zusätzliche Positionsmagnete zu verwenden und das obwohl der Abstand der Positionssensoren größer gewählt werden kann, als die Polteilung der Antriebsmagnete. Die Erfindung nutzt die Eigenschaften des Magnetfeldes der Anordnung der Antriebsmagnete aus, um den Randbereich der Anordnung zur Grobpositionierung zu erfassen. Aufgrund der bekannten geometrischen Gegebenheiten kann damit derjenige Antriebsmagnet ermittelt werden, dessen Magnetfeld von einem Positionssensor im Bereich der Anordnung erfasst wird, was für die Grobpositionierung ausreichend ist. Die genaue Positionierung erfolgt dann auf Basis des Sensorsignals des Positionssensors. Mit diesem Verfahren können die Positionssensoren folglich auch relativ weit auseinander liegend angeordnet werden, auf jeden Fall weiter auseinander, als die Polteilung der Antriebsmagnetes, womit auch Positionssensoren eingespart werden können.

Insbesondere bei weit auseinander liegenden Positionssensoren ist es vorteilhaft, wenn zur Bestimmung der Absolutposition des Läufers die Anzahl der mit dem zumindest einen Positionssensor hintereinander gemessenen Antriebsmagnete als Inkrement berücksichtigt wird. Auf diese Weise kann ein Positionssensor zur Positionsermittlung genutzt werden, solange sich die Anordnung der Antriebsmagnete in dessen Bereich befindet. Hierbei ist es vorteilhaft, wenn nach einem vorgebenen Kriterium auf einen in Bewegungsrichtung des Läufers nächstliegenden Positionssensor zur Bestimmung der Absolutposition des Läufers weitergeschaltet wird. Damit kann erreicht werden, dass immer im Bereich eines günstigen Feldlinienverlaufs des Magnetfeldes gemessen wird, was die Genauigkeit erhöht.

Zur Bestimmung des zumindest einen Randbereichs wird in vorteilhafter Weise eine vom Magnetfeld der Antriebsmagnete abhängige physikalische Größe ermittelt und ausgewertet. Damit wird der Umstand ausgenutzt, dass das Magnetfeld abseits eines Antriebsmagnetes bzw. abseits der Anordnung von Antriebsmagnete, also genau im gesuchten Randbereich, rasch und stark abfällt oder nicht mehr normal auf die Antriebsmagnete verläuft, womit eine sichere Ermittlung des Randbereichs möglich ist.

Hierfür kann als physikalische Größe ein Absolutwert eines Sensorsignals eines Positionssensors im Bereich der Anordnung der Antriebsmagnete ermittelt und damit auf einen Randbereich geschlossen werden, vorzugsweise wenn der Absolutwert einen vorgegebenen Schwellwert unterschreitet.

Alternativ dazu kann die Induktivität einer Antriebsspule im Bereich der Anordnung der Antriebsmagnete ermittelt und damit auf einen Randbereich geschlossen werden, vorzugsweise wenn die Induktivität einen vorgegebenen Schwellwert unterschreitet.

Als weitere Alternative kann ein aufgrund des Magnetfeldes der Anordnung der Antriebsmagnete nichtlinear verzerrtes Sensorsignalzyklus eines Positionssensors zur Ermittlung einer Relativposition eines Antriebsmagnets der Anordnung der Antriebsmagnete zum Positionssensor verwendet wird und daraus ein Sensorabstand zu einem weiteren Positionssensor im Bereich der Anordnung der Antriebsmagnete ermittelt wird und damit auf einen Randbereich geschlossen wird, vorzugsweise wenn der anhand des verzerrten Sensorsignalzyklus ermittelte Sensorabstand einen vorgegebenen Schwellwert unterschreitet.

Nachdem die Methoden unterschiedliche Zuverlässigkeiten aufweisen können, beispielsweise in Abhängigkeit von der Position des Läufers, können Methoden zur Ermittlung des Randbereichs vorteilhafterweise auch kombiniert werden, um die Zuverlässigkeit der Ermittlung der Absolutposition zu verbessern.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 einen Aufbau eines Linearamotors,
Fig.2 und 3 die Erfassung eines Magnetfeldes eines Antriebsmagnetes mit einem Positionssensor,
Fig.4 eine mögliche Methode zur Ermittlung eines Randbereichs der Anordnung der Antriebsmagnete am Läufer,
Fig.5 die erfindungsgemäße Ermittlung der Absolutposition des Läufers,
Fig.6 eine weitere mögliche Methode zur Ermittlung eines Randbereichs der Anordnung der Antriebsmagnete am Läufer und
Fig.7 noch eine weitere mögliche Methode zur Ermittlung eines Randbereichs der Anordnung der Antriebsmagnete am Läufer.

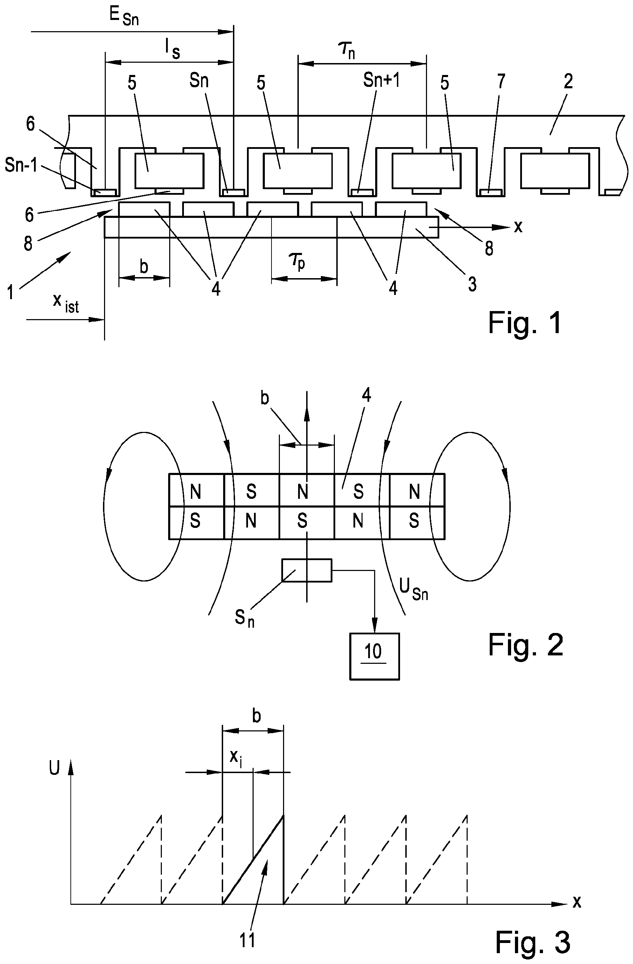

Die Erfindung wird nachfolgend ohne Einschränkung anhand eines Linearmotors 1 mit Antriebsmagneten 4 am Läufer 3 und mit ortsfesten Antriebsspulen 5 am Stator 2 beschrieben, wie in Fig.1 dargestellt.

Eine solche Konfiguration findet sich in der Regel bei Langstatorlinearmotoren. Als Antriebsmagnete 4 kommen Permanentmagnete oder Elektromagnete in Frage. In der gezeigten Ausgestaltung ist der Stator 2 mit einem Eisenkern mit Zähnen 6 (in der Regel ein Blechpaket) ausgeführt und auf jedem zweiten Zahn ist eine Antriebsspule 5 angeordnet. Natürlich kann der Stator 2 auch kernlos ausgeführt sein oder es kann auch auf jedem Zahn 6 eines Kerns eine Antriebsspule 5 angeordnet sein.

Die Erfindung geht davon aus, dass am Läufer 3 des Linearmotors 1 in der Regel immer mehrere Antriebsmagnete 4 (also mehr als ein Antriebsmagnet) angeordnet sind. Um auf einen eigenen, zusätzlichen Positionsmagneten am Läufer 3 verzichten zu können, werden nun diese Antriebsmagnete 4 gleichzeitig auch für die Positionsbestimmung verwendet. Der Abstand zwischen zwei Antriebsmagnete 4 (von Polmitte zu Polmitte) wird bekanntermaßen als Polteilung $\tau_p$ bezeichnet und der Abstand zwischen zwei Antriebsspulen 5 (von Polmitte zu Polmitte) wird als Nutteilung $\tau_n$ bezeichnet. Die Erfindung geht davon aus, dass die Positionssensoren Sn (n ist ein Index, der für alle Positionssensoren steht, also S1, S2, ...) ortsfest und in einem größeren Sensorabstand $l_S$ angeordnet sind, als die Polteilung $\tau_p$. Durch diese Anordnung kann die Anzahl der benötigten Positionssensoren reduziert werden. Im gezeigten Ausführungsbeispiel ist an jedem zweiten Zahn 6, vorzugsweise der Zahn an dem keine Antriebsspule 5 angeordnet ist, des Stators 2 ein Positionssensor Sn angeordnet, wodurch der Sensorabstand $l_S$ der Nutteilung $\tau_n$ entspricht, was aber nicht zwingend notwendig ist.

Die Antriebsmagnete 4 können unmittelbar nebeneinander angeordnet sein, oder können auch mit einem Abstand dazwischen angeordnet sein, wie in Fig.1 dargestellt. Im ersten Fall entspricht die Breite b eines Antriebsmagneten 4 der Polteilung $\tau_p$. Nachdem sich die einzelnen Magnetfelder der Antriebsmagnete 4 überlappen, fällt das Magnetfeld im Bereich des Abstandes zwischen den Antriebsmagneten 4 nur unmerklich ab. Dazu sollte der Abstand natürlich nicht zu groß werden, wobei der zulässige bzw. vertretbare Abstand natürlich von der Stärke der Antriebsmagnete 4 abhängt.

In der in Fig.1 gezeigten Position des Läufers 3 würde der Positionssensor Sn ein bestimmtes Sensorsignal $U_{Sn}$ liefern. Als Positionssensoren werden hinlänglich bekannte Sensoren verwendet, die das Magnetfeld der Antriebsmagnete 4, oder eine Eigenschaft des Magnetfeldes, messen, beispielsweise die Magnetfeldintensität (z.B. ein Hall-Sensor) oder die Richtung des Magnetfeldes (z.B. ein Magnetoresistiver Sensor). Auch Magnetostriktive Sensoren sind möglich. Solche Sensoren erzeugen bei Bewegung eines Antriebsmagnetes 4 vor dem Sensor ein Sensorsignal $U_{Sn}$, beispielsweise eine elektrische Spannung in Form eines sin/cos-Verlaufs. Aus diesem Verlauf wird in der Regel ein Sensorsignalzyklus 11, beispielsweise eine wiederkehrende Sägezahnspannung, berechnet, innerhalb dem die Po-

sition $x_i$ des Antriebsmagnetes relativ zum Sensor bestimmt werden kann. Das ist in Fig. 2 und 3 am Beispiel eines Magnetoresistiven Sensors als Positionssensor Sn dargestellt. Der Positionssensor Sn erfasst den Magnetfeldwinkel $\alpha$ des Magnetfeldes (angedeutet durch die Feldlinien in Fig. 2) aus dem ein Sensorsignal $U_{Sn}$ in Form eines elektrischen $\sin(\alpha)/\cos(\alpha)$-Signals gewonnen wird. Daraus kann über die atan- oder atan2-Winkelfunktion (atan2 entspricht dem atan mit der vorzeichenrichtigen Berücksichtigung der einzelnen Argumente der Funktion) eine Sägezahnspannung als Sensorsignalzyklus 11 ermittelt werden. Jede Spannung des Sägezahns ist einer eindeutigen Position $x_i$ des Antriebsmagnets 4 relativ zum Positionssensor Sn zugeordnet. Je nach Auflösung des Sensorsignalzyklus 11 in einer Auswerteeinheit 10 kann die Position $x_i$ mehr oder weniger genau aufgelöst bestimmt werden. Nachdem die Einbauposition des Positionssensors Sn und der konstruktive und geometrische Aufbau des Läufers natürlich bekannt sind, kann damit die absolute Position des Läufers 3 bestimmt werden, sofern bekannt ist, von wessen Antriebsmagnet 4 das mit dem Positionssensor Sn gemessene Magnetfeld stammt.

Wäre in Fig. 1 nun der Läufer 3 um die Polteilung $\tau_p$ in Bewegungsrichtung x verschoben, würde derselbe Positionssensor Sn dasselbe Signal liefern, allerdings von einem anderen Antriebsmagnet 4 herrührend, da sich der Sensorsignalzyklus 11 wiederholt. Damit ergibt sich eine Mehrdeutigkeit, die dazu führt, dass beim Einschalten des Linearmotors 1 keine eindeutige Position des Läufers 3 bestimmbar ist, weil nicht bekannt ist, welches Magnetfeld ein Sensor Sn erfasst.

Um dieses Problem zu beheben, werden erfindungsgemäß beim Einschalten des Linearmotors 1 die Wirkung der magnetischen Felder vorzugsweise aller Antriebsmagnete 4 des Läufers 3 ausgewertet. Damit soll insbesondere der Randbereich 8 (in Bewegungsrichtung x gesehen) der Anordnung der Antriebsmagnete 4 erfasst werden. Der Randbereich 8 wird im Bereich des in Bewegungsrichtung x gesehenen ersten und letzten Antriebsmagneten ausgebildet, da das von den Antriebsmagneten 4 erzeugte Magnetfeld bekanntermaßen abseits des Antriebsmagnetes 4 rasch und stark abfällt. Damit fällt auch das Magnetfeld am Rand der Anordnung der Antriebsmagnete 4 (also neben dem ersten und letzten Antriebsmagneten 4), also im Bereich des Randbereiches 8, ebenso rasch und stark ab, wohingegen in der Mitte der Anordnung der Antriebsmagnete 4 aufgrund der Überlappung der Magnetfelder mit keinem oder mit nur geringem Abfall zu rechnen ist. Das wird erfindungsgemäß ausgenutzt, um den Randbereich 8 der Anordnung der Antriebsmagnete 4 zu erfassen. Kennt man die Randbereiche 8, oder zumindest einen Randbereich 8, der Anordnung der Antriebsmagnete 4, kann daraus (wieder aus der Kenntnis des konstruktiven und geometrischen Aufbaus des Läufers 3) ermittelt werden, von wessen Antriebsmagnet 4 das mit einem Positionssensor Sn gemessene Magnetfeld stammt, da die Anordnung der Antriebsmagnete 4 zwischen den beiden Randbereichen 8 liegen muss. Für die Ermittlung dieser Zuordnung kann es aber natürlich ausreichen, nur einen Randbereich 8 zu bestimmen. Es kann auch die Situation geben, dass mehrere Läufer 3 in Bewegungsrichtung x gesehen unmittelbar hintereinander angeordnet sind, womit zwischen zwei erfassten Randbereichen 8 ein Abstand auftritt, der größer als die bekannte Länge eines Läufers 3 ist. Beispielsweise reicht in diesem Fall auch die Erfassung eines Randbereichs 8 für die Grobpositionierung eines Läufers 3 und man kann aufgrund des großen Abstandes sogar auf das Vorhandensein von mehreren Läufern 3 schließen. Die Zuordnung zwischen Antriebsmagnete 4 und Positionssensoren Sn kann natürlich auch für alle Positionssensoren Sn im Bereich der Anordnung der Antriebsmagnete 4 gemacht werden. Damit kann aufgrund der bekannten geometrischen Verhältnisse jedem Positionssensor Sn im Bereich der Anordnung der Antriebsmagnete 4 der konkrete Antriebsmagnet zugewiesen werden, dessen Magnetfeld vom jeweiligen Positionssensor Sn erfasst wird. Damit fällt die oben beschriebene Mehrdeutigkeit weg. Mit dieser Kenntnis der Zuordnung von Antriebsmagnet 4 zu Positionssensor Sn, kann dann zumindest ein beliebiger Positionssensor Sn im Bereich der Anordnung der Antriebsmagnete 4 hinsichtlich der genauen Position $x_i$ ausgelesen werden.

Hierbei ist es grundsätzlich unerheblich, welcher Positionssensor Sn im Bereich der Anordnung der Antriebsmagnete 4 zwischen den Randbereichen 8 zur Positionsbestimmung verwendet wird. Für die Positionsbestimmung des Läufers 3 reicht es natürlich aus, wenn nur ein Positionssensor Sn im Bereich der Antriebsmagnete 4 verwendet wird. Das kann grundsätzlich ein beliebiger Positionssensor Sn sein. Vorzugsweise wird aber der Positionssensor Sn herangezogen, der am nächsten an der Mitte der Anordnung der Antriebsmagnete 4 liegt, da in diesem Bereich der Verlauf der Feldlinien des Magnetfeldes der Antriebsmagnete 4 günstiger verläuft, da die Feldlinien in etwa rechtwinkelig auf den Positionssensor Sn auftreffen (siehe Fig. 2). Man könnte aber natürlich auch mehrere Positionssensoren Sn zur Positionsbestimmung heranziehen und die Absolutposition $x_{ist}$ des Läufers 3 beispielsweise als Mittelwert der bestimmten Positionen aller verwendeter Positionssensoren Sn heranziehen, oder die redundante Bestimmung der Absolutposition $x_{ist}$ zur Verifikation nutzen.

Diese Zuordnung von Antriebsmagnet 4 zu Positionssensor Sn kann aber nur mit einer eingeschränkten Genauigkeit erfolgen, weshalb auch von einer Grobpositionierung gesprochen wird. Aufgrund dieser Ungenauigkeit kann aber der Fall auftreten, dass nicht sicher festgestellt werden kann, von wessen Antriebsmagnet 4 das mit einem Positionssensor Sn gemessene Magnetfeld stammt. In diesem Fall kann einfach ein anderer, eindeutig zuordenbarer Positionssensor Sn zur Bestimmung der Absolutposition $x_{ist}$ herangezogen werden. Es könnte aber auch der Sensorsignalzyklus 11 des Positionssensors Sn als zusätzliche Informationsquelle für die Grobpositionierung verwendet werden. Der Fall der nicht klaren Zuordenbarkeit wird im Bereich um das Ende eines Sensorsignalzyklus 11 und dem Beginn des benachbarten Sensorsignalzyklus 11 auftreten. Je nachdem welchen Wert der Positionssensor Sn ausgibt, kann dann auf den einen oder anderen Antriebsmagnet 4 geschlossen werden.

Nachdem die Einbauposition $E_{Sn}$ des ausgewählten Positionssensors Sn ortsfest und bekannt ist, kennt man dann in weiterer Folge über die bekannte Einbauposition $E_{Sn}$ des Positionssensors Sn und es kann über die ermittelte Relativposition $x_i$ des Antriebsmagnets 4 zum Positionssensor Sn, und natürlich auch aufgrund der bekannten Geometrie des Läufers 3 (was natürlich auch die Geometrie (Polteilung $\tau_p$, Anzahl und/oder Breite der Antriebsmagnete 4, usw.) der Anordnung der Antriebsmagnete 4 umfasst), die aktuelle, genaue (innerhalb der vorgegebenen Sensorauflösung) Absolutposition $x_{ist}$ des Läufers 3 des Linearmotors 1 ermittelt werden.

Die weitere Positionsbestimmung bei Bewegung des Läufers 3 erfolgt dann beispielsweise inkrementell. Der Positionssensor Sn wird hierfür mit dem Index N des aktuell damit gemessenen Antriebsmagneten 4 als Startinkrement SI initialisiert. Dann kann der ausgewählte Positionssensor Sn beispielsweise solange zur Positionserfassung verwendet werden, solange sich dieser im Bereich der Antriebsmagnete 4 befindet. Dabei werden die Sensorsignalzyklen 11 als Inkrement I gezählt und innerhalb eines Sensorsignalzyklus 11 die genaue Position $x_i$ des gemessenen Antriebsmagnetes 4 bestimmt. Danach wird auf den in Bewegungsrichtung x gesehen nächsten Positionssensor Sn+1 umgeschaltet und der Positionssensor Sn+1 mit dem Index N des aktuell damit gemessenen Antriebsmagneten 4 als Startinkrement SI initialisiert. Dann wird wieder inkrementell die Absolutposition $x_{ist}$ bestimmt. Die Anzahl der mit dem Positionssensor Sn gemessenen Sensorsignalzyklen 11, also die Anzahl der mit dem neuen Positionssensor Sn+1 gemessenen Antriebsmagnete 4, wird dabei natürlich bis zum nächsten Weiterschalten auf den Positionssensor Sn+2 als Inkrement I mitgezählt und zur inkrementellen Bestimmung der Absolutposition $x_{ist}$ verwendet. Die Weiterschaltung auf den nächsten Positionssensor Sn+1 erfolgt nach einer vorgegebenen Regel, und erfolgt beispielsweise dann, wenn der nächste Positionssensor Sn+1 näher an der Mitte der Anordnung der Antriebsmagnete 4 liegt, als der vorhergehende Positionssensor Sn.

Die Absolutposition $x_{ist}$ des Läufers 3 wird natürlich bezüglich einer bekannten, in der Regel ortsfesten, Referenzposition bestimmt. Ein Läufer 3 eines Linearmotors 1 bewegt sich beispielsweise zwischen zwei Extrempunkten, die den maximalen Bewegungsbereich des Läufers 3 festlegen. Ein Extrempunkt kann dann als Referenzposition herangezogen werden. Bei einem Langstatorlinearmotor als Linearmotor 1, bei dem oftmals eine geschlossene Bahn für die Bewegung der Läufer 3 definiert ist, wird beispielsweise ein Punkt der ortsfesten Bahn als Referenzposition definiert. Die Einbaupositionen $E_{Sn}$ der Positionssensoren Sn ist dabei ebenfalls bezüglich dieser Referenzposition bekannt.

Um den zumindest einen Randbereich 8 der Anordnung von Antriebsmagnete 4 am Läufer 3 zu bestimmen, wird eine vom Magnetfeld der Antriebsmagnete 4 abhängige physikalische Größe ermittelt und ausgewertet, wie nachfolgend anhand von zwei konkreten Ausgestaltungen beschrieben wird.

Das erste Ausführungsbeispiel wird wieder, ohne Einschränkung der Allgemeinheit, anhand eines Magnetoresistiven Sensors als Positionssensor Sn beschrieben. Bekanntermaßen ist das Sensorsignal eines solchen Magnetoresistiven Sensors abhängig vom Magnetfeldwinkel $\alpha$ des auf den Sensor auftreffenden Magnetfeldes. Ausgegeben wird vom Magnetoresistiver Sensor der Sinus und Cosinus dieses Magnetfeldwinkels a, also z.B. $U_A = U\sin(\alpha)$ und $U_B = U\cos(\alpha)$, und die Relativposition $x_i$ des gemessenen Antriebsmagnetes 4 relativ zum Positionssensor Sn ist direkt proportional zu diesem Magnetfeldwinkel $\alpha$ in der Form

$$x_i = K\,\mathrm{atan}2\left[\frac{U_B}{U_A}\right]$$, mit einer durch den Positionssensor Sn vorgegebenen Konstanten K.

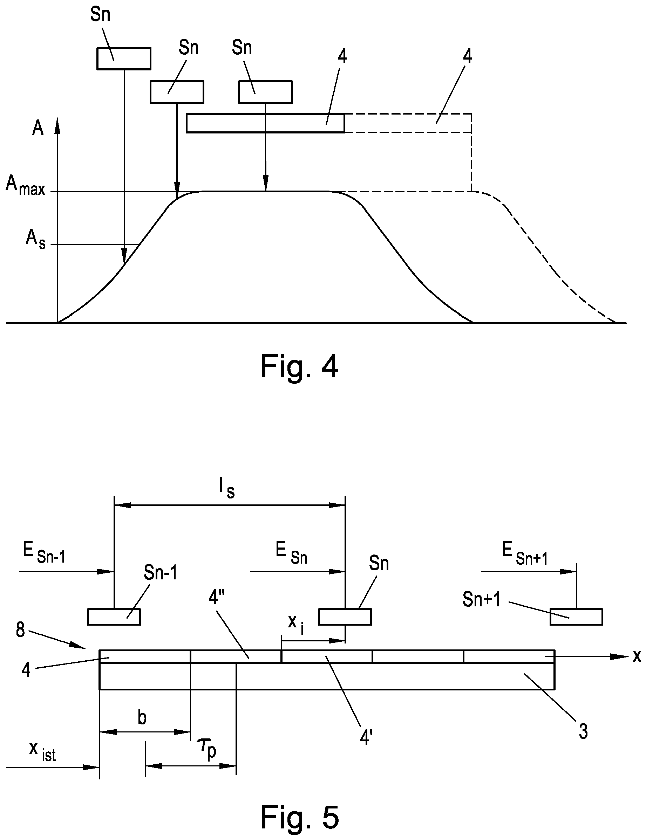

Für die Bestimmung des Randbereichs 8 wird nun die Amplitude A des Sinus und Cosinus-Spur, als vom Magnetfeld der Antriebsmagnete abhängige physikalische Größe, ausgewertet, wobei die Amplitude A definiert wird als $$A = \sqrt{U_A{}^2 + U_B{}^2}$$ . Im Sättigungsbereich des Positionssensors Sn, wenn sich also der Antriebsmagnet 4 gegenüber dem Positionssensor Sn befindet, wird die Amplitude $A_{max}$ maximal sein. Ist der Antriebsmagnet 4 nicht zur Gänze gegenüber dem Positionssensor Sn so wird der Sättigungsbereich verlassen und die Amplitude A wird abfallen. Das ist in Fig.4 für einen Antriebsmagneten 4 und mit verschiedenen angedeuteten relativen Positionen zu einem Positionssensor Sn dargestellt. Bei einer Anordnung von Antriebsmagneten 4 verlängert sich der Sättigungsbereich entsprechend, wie in Fig.4 gestrichelt angedeutet. Damit kann durch Auswerten der Amplitude A der Randbereich 8 der Anordnung der Antriebsmagnete 4 erfasst werden. Es kann ein Schwellwert $A_S$ für die Amplitude A, beispielsweise 80% $A_{max}$, festgelegt werden, wobei bei Unterschreiten des Schwellwertes $A_S$ der Randbereich erkannt wird.

In Fig.5 wird beispielsweise mit dem Positionssensor Sn-1 ein Randbereich erfasst, weil die Amplitude A dieses Sensors kleiner als ein festgelegter Schwellwert $A_S$ ist. Der Positionssensor Sn-1 befindet sich damit nicht in Sättigung, wodurch die Bestimmung der Relativposition $x_i$ nicht mehr so genau ist. Zur Ermittlung einer Grobposition des Läufers 3 reicht es aber aus, da hierfür lediglich die Betragswerte benötigt werden. Damit kann aufgrund der bekannten geometrischen Zusammenhänge über die Bestimmung der Lage eines Randbereichs 8 als Grobposition derjenige Antriebsmagnet 4' ermittelt werden, dessen Magnetfeld gerade vom Positionssensor Sn erfasst wird. Nachdem Abstand $I_S$ und die Polteilung $\tau_p$ bekannt sind, ist es einfach den zugehörigen Antriebsmagnet 4' zu eruieren. Der Index N des ermittelten Antriebsmagnets 4' in der Anordnung der Antriebsmagnet 4 am Läufer 3 ist damit ebenfalls bekannt. Im Beispiel der Fig.5 wäre der 3.Antriebsmagnet 4' dem Positionssensor Sn zugeordnet, womit der Index=3 wäre. Nachdem auf diese Weise die Zuordnungen der Antriebsmagnete 4 zu den jeweiligen Positionssensoren Sn im Bereich der Anordnung der Antriebsmagnete 4 am Läufer erfolgt ist, kann nun nach einem vorgegebenen Auswahlkriterium ein Positionssensor Sn ausgewählt werden, der zur genauen Ermittlung der Absolutposition $x_{ist}$ verwendet wird. Beispielsweise wird derjenige Positionssensor Sn ausgewählt, der am nächsten zur Mitte der Anordnung der Antriebsmagnete 4 liegt. Die Mitte ist einfach durch $(k \cdot \tau_p)/2$, mit der Anzahl k der Antriebsmagnete 4 in der Anordnung, bekannt. Aufgrund der bekannten Geometrie des Läufers 3 und der Anordnung von Antriebsmagnete 4, sowie der Kenntnis der Anordnung der Positionssensoren Sn kennt man folglich den konkreten Antriebsmagnet 4' der Anordnung der Antriebsmagnete 4, dessen Magnetfeld vom ausgewählten Positionssensor Sn gemessen wird. Der Index N des Antriebsmagnets 4', der dem Positionssensor Sn zugeordnet ist, wird als Startinkrement SI verwendet, also SI=N und im Beispiel nach Fig.5 SI=3, weil das Magnetfeld des 3.Antriebsmagnetes vom ausgewählten Positionssensor Sn erfasst wird. Mit dem ausgewählten Positionssensor Sn, der sich in Sättigung befindet, kann dann die genaue Relativposition $x_i$ bestimmt werden. Wenn der Läufer 3 nun in Bewegungsrichtung x weiterbewegt wird, wird der Positionssensor Sn irgendwann das Magnetfeld des folgenden Antriebsmagnets 4" erfassen. Es muss daher gegebenenfalls auch ein Inkrement I für die Anzahl der Sensorsignalzyklen 11 gezählt werden, solange mit dem Positionssensor Sn die Absolutposition $x_{ist}$ des Läufers ermittelt wird und dabei verschiedene Antriebsmagnete 4', 4" gemessen werden. Die Absolutposition $x_{ist}$ des Läufers 3 ergibt sich dann beispielsweise aus $x_{ist} = [(E_{Sn} - x_i)-(SI-I)\cdot\tau_p]$. Im Beispiel nach Fig.5 ist das Startinkrement SI zu Beginn 3 und das Inkrement I=1, solange der Antriebsmagnet 4' gemessen wird. Wenn der Antriebsmagnet 4" gemessen wird, wird das Inkrement I auf 2 erhöht. Das Inkrement I muss natürlich gemäß der Bewegungsrichtung x gezählt werden. Würde im Beispiel nach Flg.5 der Läufer 3 in die entgegengesetzte Richtung bewegt werden, müsste das Inkrement I beim nächsten Antriebsmagneten natürlich um Eins erniedrigt werden.

Natürlich sind, je nach konkreter Implementierung, viele andere Möglichkeiten der Berechnung der genaue Absolutposition $x_{ist}$ des Läufers 3 denkbar. Insbesondere wäre es im Beispiel nach Fig.5 auch möglich, den Randbereich im Bereich des Positionssensors Sn+1 für die Grobpositionierung zu verwenden. Das Grundprinzip bleibt dabei allerdings immer das Gleiche. Zuerst wird über die Bestimmung des zumindest einen Randbereichs 8 und der Zuordnung eines Antriebsmagnets 4' zu einem Positionssensor Sn eine Grobposition des Läufers 3 ermittelt, woraus dann anhand der bekannten Geometrie des Läufers 3, der bekannten Einbaulage $E_{Sn}$ des Positionssensors Sn und der damit bestimmten Relativposition $x_i$ die Absolutposition $x_{ist}$ bestimmt werden kann. Das erfolgt beispielsweise in der Auswerteeinheit 10.

Irgendwann muss bei Bewegung des Läufers 3 in Bewegungsrichtung x natürlich auch auf den nächsten Positionssensor Sn+1 zu Positionserfassung umgeschaltet werden, beispielsweise wenn der nächste Positionssensor Sn+1 näher zur Mitte der Anordnung der Antriebsmagnete 4 liegt als der Positionssensor Sn. Für die Weiterschaltung kann ein geeignetes Kriterium vorgegeben sein. Dabei wiederholt sich die obige Vorgehensweise. Der Index N des Antriebsmagnets 4, dessen Magnetfeld beim Umschalten auf den nächsten Positionssensor Sn+1 von diesem Positionssensor Sn+1 erfasst wird, wird als Startinkrement SI herangezogen. Das Inkrement I wird beispielsweise auf 1 gesetzt und es wird wieder die Absolutposition $x_{ist}$ wie oben berechnet.

Falls das eine Ende der Anordnung der Antriebsmagnete 4 als Randbereich 8 nicht ermittelt werden kann, beispielsweise weil kein Positionssensor Sn in diesem Bereich ein verwertbares Signal liefert, kann das andere Ende ausgewertet werden. Es können natürlich auch beide Randbereiche 8 an beiden Enden der Anordnung von Antriebsmagnete 4 für die Grobpositionierung ausgewertet werden.

Eine alternative Möglichkeit zur Bestimmung eines Randbereichs 8 nutzt die Induktivitätswerte der Antriebsspulen 5 im Stillstand des Läufers 3, also beispielsweise wiederum beim Einschalten des Linearmotors 1. Dem liegt der Gedanke zugrunde, dass die Induktivität L einer Antriebsspule 5 einen bestimmten Wert hat. Diese Induktivität L, als vom Magnetfeld der Antriebsmagnete abhängige physikalische Größe, wird aber durch das zusätzliche Magnetfeld der Antriebsmagnete 4 beeinflusst, wenn sich im Bereich einer Antriebsspule 5 ein Antriebsmagnet 4 befindet. Die Antriebsspule 5 kann als Serienschaltung eines ohmschen Widerstandes R und der Induktivität L modelliert werden. Aus der sich damit ergebenden Differentialgleichung $u = R \cdot i + L\dfrac{di}{dt}$ kann der Strom i mit $i(t) = \dfrac{u}{R}\left(1 - e^{-\frac{R}{L}t}\right)$ berechnet werden.

Wird nun an die Antriebsspule 5 ein Spannungssprung $u = u_0$ angelegt und der sich ergebende Strom i als Antwort gemessen, kann beispielsweise der Stromanstieg $di/dt$ zum Zeitpunkt $t_0=0$ ausgewertet werden. Aus der obigen Gleichung ergibt sich dann mit $di/dt$ = $\Delta i/\Delta t$ die Induktivität L mit $L = \dfrac{u_0}{\Delta i}\Delta t$. $\Delta t$ wird dabei vorgegeben und der Strom $\Delta i$ zu diesem Zeitpunkt gemessen, bzw. aus dem gemessen Strom i als Antwort auf den Spannungssprung ermittelt. Das erfolgt beispielsweise in der Auswerteeinheit 10.

Alternativ könnte die Induktivität L einer Antriebsspule 5 auch durch Einprägen von harmonischen Signalen (Sinus, Cosinus) in eine Antriebsspule 5 (z.B. Spannung u) und durch Auswerten des Betrages und Phasenverschiebung der Antwort (z.B. Strom i) ermittelt werden.

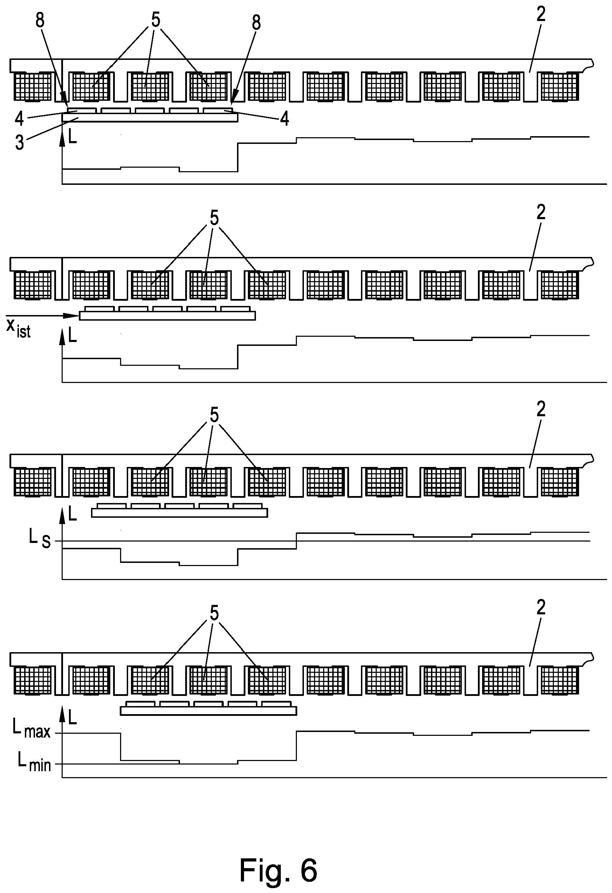

Das Ergebnis ist beispielhaft in Fig.6 dargestellt. Je nach Position $x_{ist}$ des Läufers 3 ergeben sich für die Antriebsspulen 5 unterschiedliche Induktivitäten L. Die Beeinflussung der Induktivität L einer Antriebsspule 5 durch das Magnetfeld eines Antriebsmagnetes 4 ist darin gut erkennbar. Ohne Beeinflussung, also an Stellen wo im Bereich einer Antriebsspule 5 kein Antriebsmagnet 4 zu liegen kommt, ist die Induktivität $L_{max}$ maximal. Im Gegensatz dazu ist die Induktivität $L_{min}$ minimal im Bereich der Anordnung der Antriebsmagnete 4. Im Randbereich 8 der Anordnung der Antriebsmagnete 4 wird die Induktivität L irgendwo dazwischen liegen. Der Wert der Induktivität in diesem Bereich hängt dabei von der Position des Läufers 3 relativ zur Antriebsspule 5 im Randbereich 8 ab. Dieser Zusammenhang kann beispielsweise empirisch oder durch Simulation ermittelt werden und kann als bekannt vorausgesetzt werden. Anhand des ermittelten Wertes der Induktivität L der Antriebsspule 5 kann daher wieder zumindest ein Randbereich 8 des Läufers 3 ermittelt werden, beispielsweise indem geprüft wird, ob der Induktivität L der Antriebsspule kleiner einem vorgegebenen Schwellwert $L_S$ (z.B. <80% $L_{max}$) liegt. Mit dieser Kenntnis kann die Ermittlung der genauen Absolutposition $x_{ist}$ des Läufers 3 beim Einschalten des Linearmotors 1 dann analog wie oben beschrieben durchgeführt werden.

Für dieses Verfahren sind die Induktivitäten L aller Antriebsspulen Sn zu ermitteln, oder zumindest der Antriebsspulen Sn, bei denen der Läufer 3 vermutet wird. Beispielsweise kann die letzte Position vor einem Ausschalten des Linearmotors 1 gespeichert sein. Man kann daher annehmen, dass der Läufer 3 noch ungefähr an dieser Position stehen wird und könnte nur die Induktivitäten L der Antriebsspulen Sn in dieser Umgebung ermitteln und auswerten.

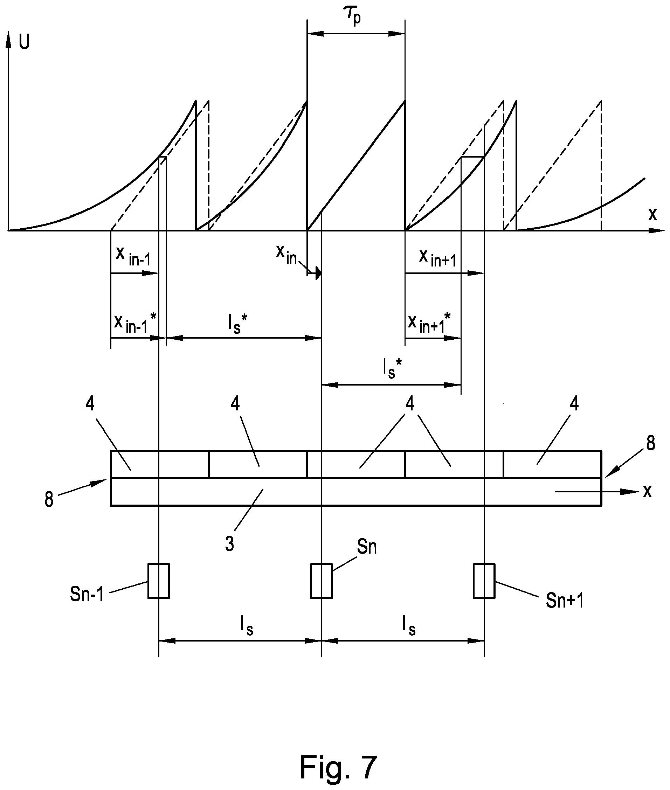

Eine weitere Möglichkeit zur Bestimmung eines Randbereichs 8 und damit der Grobposition des Läufers 3 nutzt den Umstand aus, dass aufgrund des Feldlinienverlaufs des durch die Antriebsmagnete 4 erzeugten Magnetfeldes (wie z.B. in Fig.2 dargestellt) ein mit einem Positionssensor Sn aufgenommener Sensorsignalzyklus 11 im Form eines Sägezahns nur im Bereich der Mitte des Läufers 3, also dort wo die Feldlinien annähernd normal auf die Antriebsmagnete 4 verlaufen, zu erwarten ist. Abseits der Mitte wird ein Sensorsignalzyklus 11 nichtlinear verzerrt und es kommt auch zu einer Polaufweitung, d.h. dass die Breite des Sensorsignalzyklus 11 nicht mehr mit der Polteilung $\tau_p$ eines Antriebsmagneten 4 übereinstimmt. Das ist in Fig.7 am Beispiel eines Läufers 3 mit fünf Antriebsmagneten 4 dargestellt. Ein Positionssensor Sn im Bereich der Mitte des Läufers 3 würde bei Bewegung einen nahezu idealen Sägezahn liefern, wohingegen Positionssensor Sn-1, Sn+1 abseits der Mitte ohne entsprechender Korrektur verzerrte Sägezähne (mit durchgezogenen Strichen dargestellt) liefern würden. Diese nichtlineare Verzerrung und Polaufweitung wird im Betrieb in der Regel korrigiert, sodass trotzdem eine Feinpositionsermittlung mit einem Positionssensor Sn-1, Sn+1 auch abseits der Mitte möglich ist. Diese nichtlineare Verzerrung kann aber nun auch zur Bestimmung eines Randbereichs 8 genutzt werden.

Es ist unmittelbar ersichtlich, dass im Falle eines idealen Sägezahns (strichliert in Fig.7) in den Sensorsignalzyklen 11 aus den mit den Positionssensoren Sn-1, Sn, Sn+1 gemessenen Relativpositionen $x_{in-1}$, $x_{in}$, $x_{in+1}$ und der bekannten Geometrie des Läufers 3 der Abstand zwischen zwei Positionssensoren Sn-1, Sn oder Sn, Sn+1 oder Sn-1, Sn+2 ermittelt werden kann, der dem bekannten Sensorabstand $l_s$, oder einem Vielfachen davon, entsprechen muss. Wird hingegen das nichtlinear verzerrte Signal ausgewertet, wird aus den gemessenen Relativpositionen $x_{in-1}^{*}$, $x_{in}$, $x_{in+1}^{*}$ ein Sensorabstand $l_s^{*}$, als vom Magnetfeld der Antriebsmagnete abhängige physikalische Größe, zwischen zwei Positionssensoren Sn-1, Sn oder Sn, Sn+1 oder Sn-1, Sn+2 ermittelt, der vom bekannten Sensorabstand $l_s$ abweichen wird. Diese Abweichung kann ausgewertet werden, um den Randbereich 8 zu bestimmen. Beispielsweise könnte im Bereich eines Positionssensor Sn-1 ein Randbereich 8 angenommen werden, wenn der Abstand $l_s^{*}$ (vorzugsweise als Betragswert) zum benachbarten Positionssensor Sn einen gewissen, vorgegebenen Grenzwert unterschreitet. Mit dieser Kenntnis kann die Ermittlung der genauen Absolutposition $x_{ist}$ des Läufers 3 dann analog wie oben beschrieben durchgeführt werden.

Die beschriebenen Verfahren zur Ermittlung der Randbereiche 8 und damit der Grobposition des Läufers 3 können alternativ oder auch in beliebiger Kombination eingesetzt werden. Die Kombination kann zu einer höheren Genauigkeit (durch Kontrollmöglichkeit bzw. durch Kombination der Ergebnisse beispielsweise durch Mittelwertbildung) und durch Redundanz zu einer höheren Ausfallsicherheit führen. Die beiden beschriebenen Verfahren liefern auch unterschiedliche Verlässlichkeiten. Die Methode mit dem Ermitteln der Amplituden A ist im Bereich der Positionssensoren Sn am genauesten, also wenn sich der Randbereich 8 dort befindet, wohingegen die Methode mit dem Ermitteln der Induktivitäten L im Bereich der Mittelpunkte der Antriebsspulen 5 am genauesten ist. Die Kombination kann auch diese unterschiedlichen Genauigkeiten ausgleichen bzw. kann ein Ergebnis je nach Position des Läufers 3 dem anderen Ergebnis vorgezogen werden.

Obwohl das Verfahren zur Bestimmung der Absolutposition $x_{ist}$ eines Läufers 3 am Beispiel des Einschaltens des Linearmotors 1 beschrieben wurde, ist es offensichtlich, dass das Verfahren auch in anderen Situationen angewendet werden kann. Beispielsweise könnte an einem Langstatorlinearmotor als Linearmotor 1 ein Läufer 3 auch während des Betriebs an einer bestimmten Stelle hinzugefügt werden. Die genaue Absolutposition $x_{ist}$ des hinzugefügten Läufers 3 könnte dann mit dem erfindungsgemäßen Verfahren ermittelt werden. Es sind auch Störungen denkbar, nach deren Behebung die Absolutposition $x_{ist}$ eines Läufers 3 im laufenden Betrieb neu zu bestimmen ist.

Ebenso ist es denkbar, das erfindungsgemäße Verfahren zur Bestimmung der Absolutposition $x_{ist}$ eines Läufers 3 in anderen Anwendungen als in Linearmotoren anzuwenden. Im allgemeinen Fall ist der Läufer 3 gegenüber einem ortsfesten Teil in Bewegungsrichtung x bewegbar angeordnet. Der ortsfeste Teil kann ein Stator 2 oder Langstator eines Linearmotors sein, kann aber auch ein anderer Bauteil sein. Am ortsfesten Bauteil sind dann die Positionssensoren Sn wie oben beschrieben angeordnet und die Absolutposition $x_{ist}$ des Läufers 3 bezogen auf eine ortsfeste Referenzposition kann dann wie oben beschrieben bestimmt werden.

## Patentansprüche

**1.** Verfahren zur Bestimmung der Absolutposition ($x_{ist}$) eines Läufers (3) eines Linearmotors (1), der gegenüber einem ortsfesten Teil in einer Bewegungsrichtung (x) bewegbar ist, wobei am Läufer (3) eine Anordnung von Antriebsmagnete (4) in Form einer Mehrzahl von in Bewegungsrichtung (x) des Läufers (3) nebeneinander angeordneten Antriebsmagneten (4) vorgesehen ist und am ortsfesten Teil in Bewegungsrichtung (x) des Läufers (3) eine Mehrzahl von Positionssensoren (Sn-1, Sn, Sn+1) ortsfest und beabstandet voneinander angeordnet sind, wobei mit einem Positionssensor (Sn-1, Sn, Sn+1) ein Magnetfeld eines Antriebsmagnetes (4) der Anordnung der Antriebsmagnete (4) im Bereich des Positionssensors (Sn-1, Sn, Sn+1) erfasst wird, **dadurch gekennzeichnet, dass** zumindest ein Randbereich (8) der Anordnung von Antriebsmagneten (4) bestimmt wird und daraus eine Grobposition des Läufers (3) abgeleitet wird, anhand der mit der bekannten Geometrie des Läufers (3) derjenige konkrete Antriebsmagnet (4) der Anordnung von Antriebsmagnete (4) ermittelt wird, dessen Magnetfeld von zumindest einem der Positionssensore (Sn-1, Sn, Sn+1) im Bereich der Anordnung von Antriebsmagnete (4) erfasst wird, wobei der zumindest eine Positionssensor (Sn-1, Sn, Sn+1) eine Relativposition ($x_i$) des

gemessenen Antriebsmagneten (4) relativ zum zumindest einen Positionssensor (Sn-1, Sn, Sn+1) ermittelt **und dass** aus der bekannten Einbauposition ($E_{Sn-1}$, $E_{Sn}$, $E_{Sn+1}$) dieses zumindest einen Positionssensors (Sn-1, Sn, Sn+1) und aus der ermittelten Relativposition ($x_i$) die Absolutposition ($x_{ist}$) des Läufers (3) bestimmt wird.

**2.** Verfahren nach Anspruch 1, **dadurch gekennzeichnet, dass** zur Bestimmung der Absolutposition ($x_{ist}$) des Läufers (3) die Anzahl der mit dem zumindest einen Positionssensor (Sn-1, Sn, Sn+1) hintereinander gemessenen Antriebsmagnete (4) als Inkrement (I) berücksichtigt wird.

**3.** Verfahren nach Anspruch 1 oder 2, **dadurch gekennzeichnet, dass** nach einem vorgegebenen Kriterium auf einen in Bewegungsrichtung (x) des Läufers (3) nächstliegenden Positionssensor (Sn-1, Sn, Sn+1) zur Bestimmung der Absolutposition ($x_{ist}$) des Läufers (3) weitergeschaltet wird.

**4.** Verfahren nach einem der Ansprüche 1 bis 3, **dadurch gekennzeichnet, dass** zur Bestimmung des zumindest einen Randbereichs (8) eine vom Magnetfeld der Antriebsmagnete (4) abhängige physikalische Größe ermittelt und ausgewertet wird.

**5.** Verfahren nach Anspruch 4, **dadurch gekennzeichnet, dass** ein Absolutwert (A) eines Sensorsignals eines Positionssensors (Sn-1, Sn, Sn+1) im Bereich der Anordnung der Antriebsmagnete (4) ermittelt wird und damit auf einen Randbereich (8) geschlossen wird.

**6.** Verfahren nach Anspruch 5, **dadurch gekennzeichnet, dass** auf einen Randbereich (8) geschlossen wird, wenn der Absolutwert (A) einen vorgegebenen Schwellwert ($A_S$) unterschreitet.

**7.** Verfahren nach Anspruch 4, **dadurch gekennzeichnet, dass** die Induktivität (L) einer Antriebsspule (5) im Bereich der Anordnung der Antriebsmagnete (4) ermittelt wird und damit auf einen Randbereich (8) geschlossen wird.

**8.** Verfahren nach Anspruch 7, **dadurch gekennzeichnet, dass** auf einen Randbereich (8) geschlossen wird, wenn die Induktivität (L) einen vorgegebenen Schwellwert ($L_S$) unterschreitet.

**9.** Verfahren nach Anspruch 4, **dadurch gekennzeichnet, dass** ein aufgrund des Magnetfeldes der Anordnung der Antriebsmagnete (4) nichtlinear verzerrter Sensorsignalzyklus (11) eines Positionssensors (Sn-1, Sn, Sn+1) zur Ermittlung einer Relativposition ($x_i$) eines Antriebsmagnets (4) der Anordnung der Antriebsmagnete (4) zum Positionssensor (Sn-1, Sn, Sn+1) verwendet wird und daraus ein Sensorabstand ($I_S^*$) zu einem weiteren Positionssensor (Sn-1, Sn, Sn+1) im Bereich der Anordnung der Antriebsmagnete (4) ermittelt wird und damit auf einen Randbereich (8) geschlossen wird.

10. Verfahren nach Anspruch 9, **dadurch gekennzeichnet, dass** auf einen Randbereich (8) geschlossen wird, wenn die Differenz aus dem anhand des verzerrten Sensorsignalzyklus (11) ermittelten Sensorabstand ($I_S^*$) und einem bekannten tatsächlichen Sensorabstand ($I_S$) einen vorgegebenen Schwellwert unterschreitet.

11. Verfahren nach einem der Ansprüche 5 bis 10, **dadurch gekennzeichnet, dass** zur Ermittlung des zumindest einen Randbereichs (8) zumindest zwei physikalische Größen ausgewertet werden.

12. Linearmotor mit einem Stator (2) und einem Läufer (3), der entlang des Stators (2) bewegbar ist, wobei am Läufer (3) eine Anordnung von Antriebsmagnete (4) in Form einer Mehrzahl von in Bewegungsrichtung (x) des Läufers (3) nebeneinander angeordneten Antriebsmagneten (4) mit einer Polteilung ($\tau_p$) vorgesehen ist und im Linearmotor (1) in Bewegungsrichtung (x) des Läufers (3) eine Mehrzahl von Positionssensoren (Sn-1, Sn, Sn+1) ortsfest und mit einem Sensorabstand ($I_S$) beabstandet voneinander angeordnet sind, wobei der Positionssensor (Sn-1, Sn, Sn+1) ein Magnetfeld eines Antriebsmagneten (4) der Anordnung der Antriebsmagnete (4) im Bereich des Positionssensors (Sn-1, Sn, Sn+1) erfasst, **dadurch gekennzeichnet, dass** der Sensorabstand ($I_S$) der Positionssensoren (Sn-1, Sn, Sn+1) größer ist, als die Polteilung ($\tau_p$) der Antriebsmagnete (4), **dass** eine Auswerteeinheit (10) vorgesehen ist, die einen Randbereich (8) der Anordnung von Antriebsmagneten (4) bestimmt und daraus eine Grobposition des Läufers (3) ableitet, und anhand der mit der bekannten Geometrie des Läufers (3) derjenige konkrete Antriebsmagnet (4) der Anordnung von Antriebsmagnete (4) ermittelt wird, dessen Magnetfeld zumindest ein Positionssensor (Sn-1, Sn, Sn+1) im Bereich der Anordnung von Antriebsmagnete (4) erfasst, wobei der zumindest eine Positionssensor (Sn-1, Sn, Sn+1) eine Relativposition ($x_i$) des gemessenen Antriebsmagneten (4) relativ zum zumindest einen Positionssensor (Sn-1, Sn, Sn+1) ermittelt **und dass** die Auswerteeinheit (10) aus der bekannten Einbauposition ($E_{Sn-1}$, $E_{Sn}$, $E_{Sn+1}$) dieses zumindest einen Positionssensors (Sn-1, Sn, Sn+1) und aus der ermittelten Relativposition ($x_i$) die Absolutposition ($x_{ist}$) des Läufers (3) bestimmt.

**Claims**

1. A method for determining the absolute position ($x_{ist}$) of a rotor (3) of a linear motor (1) that is movable with respect to a stationary part in a direction of movement (x), wherein an arrangement of drive magnets (4) in the form of a plurality of drive magnets (4) arranged adjacently in the direction of movement (x) of the rotor (3) is provided on the rotor (3), and a plurality of position sensors (Sn-1, Sn, Sn+1) are stationarily arranged at a distance from one another on the stationary part in the direction of movement (x) of the rotor (3), wherein a magnetic field of a drive magnet (4) of the arrangement of drive magnets (4) in the area of the position sensor (Sn-1, Sn, Sn+1) is detected with a position sensor (Sn-1, Sn, Sn+1), **characterized in that** at least one edge area (8) of the arrangement of drive magnets (4) is determined, and a rough position of the rotor (3) is derived therefrom, on the basis of which, using the known geometry of the rotor (3), the specific drive magnet (4) of the arrangement of drive magnets (4) is determined whose magnetic field is detected by at least one of the position sensors (Sn-1, Sn, Sn+1) in the area of the arrangement of drive magnets (4), wherein the at least one position sensor (Sn-1, Sn, Sn+1) determines a relative position ($x_i$) of the measured drive magnet (4) with respect to the at least one position sensor (Sn-1, Sn, Sn+1), **and in that** the absolute position ($x_{ist}$) of the rotor (3) is determined from the known mounting position ($E_{Sn-1}$, Esn, $E_{Sn+1}$) of this at least one position sensor (Sn-1, Sn, Sn+1) and from the determined relative position ($x_i$).

2. The method according to Claim 1, **characterized in that** for determining the absolute position ($x_{ist}$) of the rotor (3), the number of drive magnets (4) measured in succession with the at least one position sensor (Sn-1, Sn, Sn+1) is considered as an increment (I).

3. The method according to Claim 1 or 2, **characterized in that** according to a predefined criterion, it is switched to a position sensor (Sn-1, Sn, Sn+1) that is following in the direction of movement (x) of the rotor (3) in order to determine the absolute position ($x_{ist}$) of the rotor (3).

4. The method according to one of Claims 1 to 3, **characterized in that** for determining the at least one edge area (8), a physical variable that is a function of the magnetic field of the drive magnets (4) is determined and evaluated.

5. The method according to Claim 4, **characterized in that** an absolute value (A) of a sensor signal of a position sensor (Sn-1, Sn, Sn+1) in the area of the arrangement of the drive magnets (4) is determined, and a conclusion concerning an edge area (8) is thus drawn.

6. The method according to Claim 5, **characterized in that** a conclusion concerning an edge area (8) is drawn when the absolute value (A) falls below a predefined threshold value (As).

7. The method according to Claim 4, **characterized in that** the inductance (L) of a drive coil (5) in the area of the arrangement of drive magnets (4) is determined, and a conclusion concerning an edge area (8) is thus drawn.

8. The method according to Claim 7, **characterized in that** a conclusion concerning an edge area (8) is drawn when the inductance (L) falls below a predefined threshold value (Ls).

9. The method according to Claim 4, **characterized in that** a sensor signal cycle (11) of a position sensor (Sn-1, Sn, Sn+1) that is nonlinearly distorted due to the magnetic field of the arrangement of drive magnets (4) is used for determining a relative position $(x_i)$ of a drive magnet (4) of the arrangement of drive magnets (4) with respect to the position sensor (Sn-1, Sn, Sn+1), and on this basis a sensor distance $(I_S^*)$ from another position sensor (Sn-1, Sn, Sn+1) in the area of the arrangement of drive magnets (4) is determined, and a conclusion concerning an edge area (8) is thus drawn.

10. The method according to Claim 9, **characterized in that** a conclusion concerning an edge area (8) is drawn when the difference between the sensor distance $(I_S^*)$ determined based on the distorted sensor signal cycle (11) and a known actual sensor distance (Is) falls below a predefined threshold value.

11. The method according to one of Claims 5 to 10, **characterized in that** at least two physical variables are evaluated for determining the at least one edge area (8).

12. A linear motor having a stator (2) and a rotor (3) that is movable along the stator (2), wherein an arrangement of drive magnets (4) in the form of a plurality of drive magnets (4) arranged adjacently in the direction of movement (x) of the rotor (3), with a pole pitch $(\tau_p)$, is provided on the rotor (3), and a plurality of position sensors (Sn-1, Sn, Sn+1) are stationarily arranged in the linear motor (1) at a distance from one another at a sensor distance (Is) in the direction of movement (x) of the rotor (3), wherein the position sensor (Sn-1, Sn, Sn+1) detects a magnetic field of a drive magnet (4) of the arrangement of the drive magnets (4) in the area of the position sensor (Sn-1, Sn, Sn+1), **characterized in that** the sensor distance (Is) of the position sensors (Sn-1, Sn, Sn+1) is greater than the pole pitch $(\tau_p)$ of the drive magnets (4), **that** an evaluation unit (10) is provided that determines an edge area (8) of the arrangement of drive magnets (4) and derives a rough position of the rotor (3) therefrom, on the basis of which, using the known geometry of the rotor (3), the specific drive magnet (4) of the arrangement of drive magnets (4) is determined whose magnetic field is detected by at least one position sensor (Sn-1, Sn, Sn+1) in the area of the arrangement of drive magnets (4), wherein the at least one position sensor (Sn-1, Sn, Sn+1) determines a relative position $(x_i)$ of the measured drive magnet (4) with respect to the at least one position sensor (Sn-1, Sn, Sn+1), **and that** the evaluation unit (10) determines the absolute position $(x_{ist})$ of the rotor (3) from the known mounting position $(E_{Sn-1}, E_{Sn}, E_{Sn+1})$ of this at least one position sensor (Sn-1, Sn, Sn+1) and from the determined relative position $(x_i)$.

**Revendications**

1. Procédé de détermination de la position absolue $(x_{ist})$ d'un rotor (3) d'un moteur linéaire (1) qui est mobile dans une direction de déplacement (x) par rapport à une pièce fixe, dans lequel, au niveau du rotor (3), un agencement d'aimants d'entraînement (4) est prévu sous forme d'une pluralité d'aimants d'entraînement (4) disposés côte à côte dans la direction de déplacement (x) du rotor (3), et, au niveau de la pièce fixe, une pluralité de capteurs de position (Sn-1, Sn, Sn+1) sont disposés en position fixe et à distance les uns des autres dans la direction de déplacement (x) du rotor (3), dans lequel un champ magnétique d'un aimant d'entraînement (4) de l'agencement d'aimants d'entraînement (4) est détecté dans la zone du capteur de position (Sn-1, Sn, Sn+1) à l'aide d'un capteur de position (Sn-1, Sn, Sn+1), **caractérisé en ce qu'**au moins une zone de bord (8) de l'agencement d'aimants d'entraînement (4) est déterminée et **en ce qu'**une position approximative du rotor (3) en est déduite, laquelle position approximative du rotor permet de déterminer, grâce à la géométrie connue du rotor (3), l'aimant d'entraînement (4) spécifique de l'agencement d'aimants d'entraînement (4) dont le champ magnétique est détecté par au moins un des capteurs de position (Sn-1, Sn, Sn+1) dans la zone de l'agencement d'aimants d'entraînement (4), dans lequel l'au moins un capteur de position (Sn-1, Sn, Sn+1) détermine une position relative $(x_i)$ de l'aimant d'entraînement (4) mesuré par rapport à l'au moins un capteur de position (Sn-1, Sn, Sn+1), et **en ce que** la position absolue $(x_{ist})$ du rotor (3) est déterminée à partir de la position de montage $(E_{Sn-1}, E_{Sn}, E_{Sn+1})$ connue dudit au moins un capteur de position (Sn-1, Sn, Sn+1) et à partir de la position relative $(x_i)$ détermi-

née.

2. Procédé selon la revendication 1, **caractérisé en ce que,** pour déterminer la position absolue ($x_{ist}$) du rotor (3), on considère comme incrément (I) le nombre d'aimants d'entraînement (4) mesurés successivement à l'aide de l'au moins un capteur de position (Sn-1, Sn, Sn+1).

3. Procédé selon la revendication 1 ou 2, **caractérisé en ce que,** selon un critère prédéfini, le capteur de position (Sn-1, Sn, Sn+1) le plus proche dans la direction de déplacement (x) du rotor (3) continue d'être commandé pour déterminer la position absolue ($x_{ist}$) du rotor (3).

4. Procédé selon l'une des revendications 1 à 3, **caractérisé en ce que,** pour déterminer l'au moins une zone de bord (8), une grandeur physique dépendant du champ magnétique des aimants d'entraînement (4) est déterminée et évaluée.

5. Procédé selon la revendication 4, **caractérisé en ce qu'**une valeur absolue (A) d'un signal de capteur d'un capteur de position (Sn-1, Sn, Sn+1) est déterminée dans la zone de l'agencement d'aimants d'entraînement (4) et **en ce qu'**une zone de bord (8) est ainsi déduite.

6. Procédé selon la revendication 5, **caractérisé en ce qu'**une zone de bord (8) est déduite lorsque la valeur absolue (A) tombe en dessous d'une valeur seuil ($A_s$) prédéfinie.

7. Procédé selon la revendication 4, **caractérisé en ce que** l'inductance (L) d'une bobine de commande (5) est déterminée dans la zone de l'agencement d'aimants de commande (4) et **en ce qu'**une zone de bord (8) est ainsi déduite.

8. Procédé selon la revendication 7, **caractérisé en ce qu'**une zone de bord (8) est déduite lorsque l'inductance (L) tombe en dessous d'une valeur seuil ($L_S$) prédéfinie.

9. Procédé selon la revendication 4, **caractérisé en ce qu'**un cycle de signal de capteur (11) d'un capteur de position (Sn-1, Sn, Sn+1), lequel cycle de signal de capteur présente une distorsion non linéaire en raison du champ magnétique de l'agencement d'aimants d'entraînement (4), permet de déterminer une position relative ($x_i$) d'un aimant d'entraînement (4) de l'agencement d'aimants d'entraînement (4) par rapport au capteur de position (Sn-1, Sn, Sn+1) et **en ce qu'**une distance de capteur ($I_S{}^*$) par rapport à un autre capteur de position (Sn-1, Sn, Sn+1) est ainsi déterminée dans la zone de l'agencement d'aimants d'entraînement (4) et **en ce qu'**une zone de bord (8) est ainsi déduite.

10. Procédé selon la revendication 9, **caractérisé en ce qu'**une zone de bord (8) est déduite lorsque la différence entre la distance de capteur ($I_S{}^*$) déterminée au moyen du cycle de signal de capteur (11) présentant une distorsion non linéaire et une distance de capteur réelle ($I_S$) connue tombe en dessous d'une valeur seuil prédéfinie.

11. Procédé selon l'une des revendications 5 à 10, **caractérisé en ce qu'**au moins deux grandeurs physiques sont évaluées pour déterminer l'au moins une zone de bord (8).

12. Moteur linéaire comprenant un stator (2) et un rotor (3) pouvant être déplacé le long du stator (2), dans lequel, au niveau du rotor (3), un agencement d'aimants d'entraînement (4) est prévu sous forme d'une pluralité d'aimants d'entraînement (4) présentant un pas polaire ($\tau_P$) et disposés côte à côte dans la direction de déplacement (x) du rotor (3), et, dans le moteur linéaire (1), une pluralité de capteurs de position (Sn-1, Sn, Sn+1) sont disposés en position fixe et à distance les uns des autres par une distance de capteur ($I_S$) dans la direction de déplacement (x) du rotor (3), dans lequel le capteur de position (Sn-1, Sn, Sn+1) détecte un champ magnétique d'un aimant d'entraînement (4) de l'agencement d'aimants d'entraînement (4) dans la zone du capteur de position (Sn-1, Sn, Sn+1), **caractérisé en ce que** la distance de capteur ($I_S$) des capteurs de position (Sn-1, Sn, Sn+1) est supérieure au pas polaire ($\tau_P$) des aimants d'entraînement (4), **en ce qu'**une unité d'évaluation (10) est prévue, laquelle unité d'évaluation détermine une zone de bord (8) de l'agencement d'aimants d'entraînement (4) et en déduit une position approximative du rotor (3), laquelle position approximative du rotor permet de déterminer, grâce à la géométrie connue du rotor (3), un aimant d'entraînement (4) spécifique de l'agencement d'aimants d'entraînement (4) dont le champ magnétique est détecté par au moins un capteur de position (Sn-1, Sn, Sn+1) dans la zone de l'agencement d'aimants d'entraînement (4), dans lequel l'au moins un capteur de position (Sn-1, Sn, Sn+1) détermine une position relative ($X_i$) de l'aimant d'entraînement (4) mesuré par rapport à l'au moins un capteur de position (Sn-1, Sn, Sn+1), et **en ce que** l'unité d'évaluation (10) détermine la position absolue ($x_{ist}$) du rotor (3) à partir de la position de montage ($E_{Sn-1}$, $E_{Sn}$, $E_{Sn+1}$) connue dudit au moins un capteur de position (Sn-1, Sn, Sn+1) et à partir de la position relative ($X_i$) déterminée.

$E_{Sn}$

$l_S$

$\tau_n$

5   Sn   5   Sn+1   5   7   2

6

Sn-1

6

8

1

$x_{ist}$

b

4

$\tau_p$

4

3

8

x

## Fig. 1

b   4

| N | S | N | S | N |
|---|---|---|---|---|
| S | N | S | N | S |

$S_n$

$U_{Sn}$

10

## Fig. 2

b

$x_i$

U

11

x

## Fig. 3

## Fig. 4

## Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7932684 B2
- US 7994742 B2
- US 6876107 B2
- US 20110050007 A1